# EUROPÄISCHE PATENTSCHRIFT

(11) **EP 0 440 827 B1**
(45) Veröffentlichungstag und Bekanntmachung des Hinweises auf die Patenterteilung: **06.07.1994**
(21) Anmeldenummer: 90101774.9
(22) Anmeldetag: 30.01.1990
(51) Int. Cl.: B27B 17/08, F16D 49/10, F16D 59/02

(54) **Bremseinrichtung an einer motorgetriebenen Handsäge, insbesondere einer Motorkettensäge**
Braking device for a motorized hand saw, in particular a chain saw
Dispositif de freinage pour une scie à main motorisée, en particulier une scie à chaîne

(43) Veröffentlichungstag der Anmeldung: 14.08.1991
(73) Patentinhaber: Dolmar GmbH, 22045 Hamburg (DE)
(72) Erfinder: Jaensch, Wolfgang, D-2071 Tremsbüttel (DE)
(74) Vertreter: Richter, Werdermann & Gerbaulet

(56) Entgegenhaltungen:
- WO-A-80/00548
- DE-A- 2 217 707
- FR-A- 1 561 375
- FR-A- 2 527 134
- FR-A- 2 527 134
- US-A- 4 011 763
- US-A- 4 651 583

## Beschreibung

Die Erfindung betrifft eine Bremseinrichtung an einer motorgetriebenen Handsäge, insbesondere einer Motorkettensäge, mit einem Antriebsgehäuse, bei welcher zur Vermeidung eines bedrohlichen Betriebszustandes in der Nähe eines quer zum Sägewerkzeug verlaufenden Führungsgriffes ein von der Bedienungsperson um eine gehäusefeste Achse verschwenkbarer Handschutzhebel angeordnet ist, der bei seiner Schwenkbewegung eine unter der Kraft eines Federelementes stehende Bandbremse durch Aufhebung einer Rastverriegelung zur Anlage an einer mit dem Sägewerkzeug umlaufenden Bremstrommel bringt, wobei mit dem Handschutzhebel ein Betätigungsnocken betätigbar ist, mit dem ein um eine Schwenkachse schwenkbar gelagerter Schwenkhebel durch eine vom Führungsgriff wegführende Schwenkbewegung des Handschutzhebels entriegelbar ist und dabei die Bremseinrichtung zur Wirkung bringt, und wobei das Federelement zusätzlich zur Fixierung des Handschutzhebels in seiner Ruhestellung dient, und das Bremsband einendseitig gehäusefest und mit seinem anderen Ende an einem im Antriebsgehäuse linear geführten, verschiebbaren und mit der Bremsfeder verbundenes Führungsglied befestigt ist, daß ein an einem um die gehäusefeste Schwenkachse schwenkbarer, einarmige Schwenkhebel schwenkbar angelenktes Zwischenglied an dem Führungsglied schwenkbar so angelenkt ist, daß von dem Schwenkhebel und dem Zwischenglied ein Kniehebelgelenk als Rastverriegelung gebildet wird, und daß der Schwenkhebel an einen Auslöse- und Rastabschnitt des Handschutzhebels anlegbar und bei gleitender Berührung bei einer Schwenkbewegung des Handschutzhebels aus der Raststellung in eine entriegelte Stellung verschwenkbar ist, wie sie aus der FR-A-25 27 134 bekannt ist.

Bremseinrichtungen für Motorkettensägen, bei denen eine Auslösung über einen im Bereich eines Führungsgriffs angeordneten Handschutzhebel erfolgt, sind in den verschiedensten Ausfertigungen bekannt.

Bei den bekannten Systemen (DE-OS 24 59 528 o. DE-OS 22 17 707) wird die erforderliche Bremskraft mittels einer Zug- bzw. Druckfeder erzeugt, und zusätzlich wird ein weiteres Federelement (Zugfeder, Druckfeder, Blattfeder), teilweise in Verbindung mit einem zusätzlichen Hebel zur Fixierung des Handschutzhebels als Auslösehebel in seiner Ruhestellung (Betriebsstellung der Motorsäge) eingesetzt.

Die WO-A-80 00 548 betrifft eine Bremseinrichtung an einer motorgetriebenen Handsäge, insbesondere einer Motorkettensäge mit einem Antriebsgehäuse, bei welcher zur Vermeidung eines bedrohlichen Betriebszustandes in der Nähe eines quer zum Sägewerkzeug verlaufenden Führungsgriffes eine von der Bedienungsperson um eine gehäusefeste Achse verschwenkbarer Handschutzhebel angeordnet ist, der bei seiner Schwenkbewegung eine unter der Kraft eines Federelementes stehende Bandbremse durch Aufhebung einer Rastverriegelung zur Anlage an einer mit dem Sägewerkzeug umlaufenden Bremstrommel bringt, wobei mit dem Handschutzhebel ein Betätigungsnocken betätigbar ist, mit dem ein um eine Schwenkachse schwenkbar gelagerten Schwenkhebel durch eine vom Führungsgriff wegführende Schwenkbewegung des Handschutzhebels entriegelbar ist und dabei die Bremseinrichtung zur Wirkung bringt, und durch eine entgegengesetzte Schwenkbewegung des Handschutzhebels unter Lösen des Bremsbandes der Schwenkhebel spannbar und verriegelbar ist, wobei das Federelement zusätzlich zur Fixierung des Handschutzhebels in seiner Ruhestellung dient.

Es ist daher Aufgabe der vorliegenden Erfindung, eine Bremseinrichtung mit einem Auslöse- und Spannsystem zu schaffen, bei dem das System einen einfachen Aufbau aufweisen soll, wobei die dadurch erzielbare Einsparung von Bauteilen (z.B. Federelement, Hebel, Achse, Sicherungselement) zu einer Reduzierung von Gewicht, Baugröße und Kosten führen soll.

Diese Aufgabe wird durch im Patentanspruch 1 gekennzeichneten Merkmale gelöst.

Die angegebene Lösung erlaubt das Fixieren des Handschutzhebels über die in das Kniehebelgelenk eingeleitete Kraft der Bremsfeder. Die Auslösung des Systems wird duch Vorwärtsverschwenken des Handschutzhebels eingeleitet. Es wird erreicht, daß das Bremsfederelement zusätzlich zur Fixierung des Handschutzhebels dient. Es ist dabei eine Steuerkurve vorgesehen, wobei über die Steuerkurve das Kniehebelgelenk aus der Raststellung herausgedrückt wird, bis das System auslöst. Die gesamte Federkraft steht nunmehr zum Bremsen zur Verfügung. Zum Spannen des Systems wird der Handschutzhebel in die entgegengesetzte Richtung bewegt, bis über den Auslösehebel und das Zwischenglied bzw. über den Spannhebel das Kniehebelsystem in seine gespannte Stellung gezogen worden ist. Die Federkraft führt dann den Handschutzhebel über das Kniehebelgelenk und die Steuerkurve wieder in die Betriebsstellung als Rast- bzw. Ruhestellung zurück. Besonders vorteilhafterweise erlaubt die vorgesehene Lösung die Montage sowie das erste Spannen der Bremsfeder ohne Zuhilfenahme von zusätzlichen Werkzeugen, was für die Erstmontage und den Serive von besonders positiver Bedeutung ist.

Es ist daher erstmalig möglich geworden, die Bremseinrichtung so zu gestalten, daß ohne Verwendung einer aufwendigen Mechanik eine raumsparende Bauweise für eine Bremseinrichtung erreicht wurde, wobei gleichzeitig gewährleistet ist, daß einerseits ein kurzer Weg des Handschutzhebels beim Auslösen der Bremseinrichtung ausreichend ist, während andererseits die Bremskraft und die Haltekraft für den Handschutzhebel aus nur einem Federelement bezogen wird und eine automatische Fixierung in der Ruhe- bzw. Auslösestellung erfolgt.

Die Steuerkurve wirkt mit einem Betätigungsnocken zusammen, so daß über die Ausformung der Steuerkurve einerseits eine Auslösung des Bremssystems und andererseits eine definierte Ruhelage des Systems in seiner gespannten Stellung bewirkt wird. Hierzu ist die Steuerkurve als Einziehung im Auslösehebel bzw. im Handschutzhebel ausgebildet, wobei im Bereich mindestens eines oder wenig eingezogenen Abschnittes der Steuerkurve die Auslösung des Systems bewirkt wird, während der Punkt der stärksten Einziehung der Steuerkurve als Ruhepunkt ausgebildet ist, dem eine Ruhestellung des jeweiligen Betätigungsnockens und damit des Handschutzhebels entspricht.

Die Ausbildung der Steuerkurve ist dabei den jeweils geometrischen Gegebenheiten anzupassen und kann bogenförmig, dreieckförmig oder eine andere geeignete geometrische Form aufweisend vorgesehen werden. Die Bedingung besteht lediglich darin, daß ein Fixpunkt als Ruhepunkt, ein zur Auslösung des Systems dienender Abschnitt und ein beim Spannen des Systems zur Anwendung kommender Abschnitt vorgesehen ist.

Dem Ruhepunkt als Auslösepunkt entspricht dabei eine Endstellung bzw. Raststellung des Kniehebelgelenkes, so daß bei einer Bewegung des Handschutzhebels aus der Ruhestellung eine Auslösung des Systems sichergestellt ist.

Vorteilhafte Ausgestaltungen und Weiterbildungen der Erfindung sind in den Unteransprüchen gekennzeichnet. Ausführungsbeispiele der Erfindung werden nachstehend anhand der Zeichnung erläutert. Es zeigen
- **Fig. 1**: in einer Seitenansicht einen Teil einer Motorkettensäge mit einer ersten Ausführungsform einer Bremseinrichtung in rein schematischer Darstellung,
- **Fig. 2**: in einer gegenüber Fig.1 vergrößerten Teilansicht die Bremseinrichtung in einer schematischen Darstellung,
- **Fig. 3**: die Bremseinrichtung gem. Fig.2 in ausgelöster Stellung,
- **Fig. 4**: die Bremseinrichtung gem. Fig.2 in einer Stellung während des Spannvorgangs.

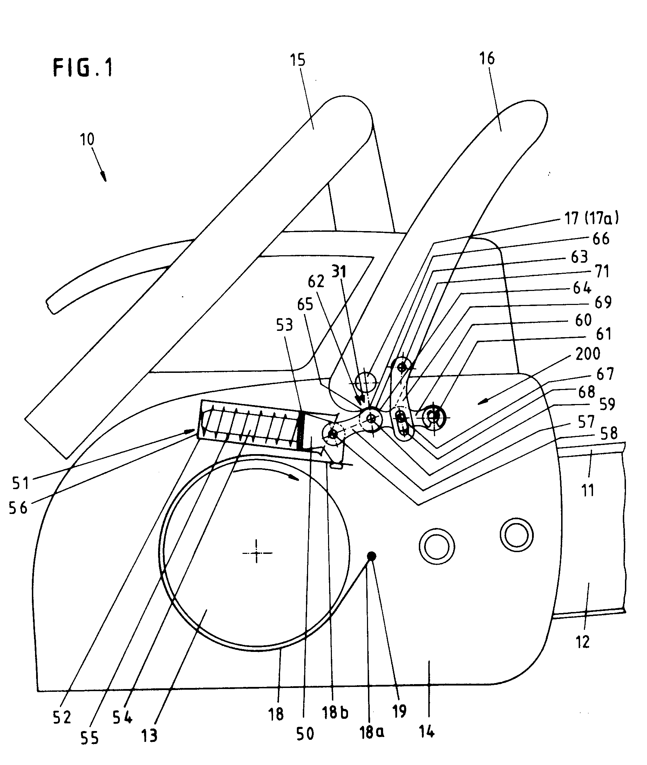

Die in Fig.1 dargestellte weitere Ausführungsform der Bremseinrichtung an einer Motorkettensäge 10 ist mit 200 bezeichnet. Auch bei dieser Ausführungsform wird über einen nicht dargestellten Antrieb eine angedeutete Sägekette 11 um ein Schwert 12 umlaufend angetrieben. Mit dem Antrieb ist über eine ebenfalls nicht dargestellte Fliehkraftkupplung eine Bremstrommel 13 verbunden, mit der ein ebenfalls nicht dargestelltes Zahnrad für den Antrieb der Sägekette 11 verbunden ist. An dem Gehäuse 14 der Motorkettensäge 10 ist an der Oberseite ein vorderer Handgriff 15 angeordnet, der beim Betrieb der Motorkettensäge zusammen mit einem ebenfalls nicht dargestellten hinteren Handgriff ergriffen wird. Im Bereich des Handgriffs 15 ist ein Handschutzhebel 16 angeordnet, der um eine gehäusefeste Achse 17, die von einem Achsbolzen 17a gebildet wird, verschwenkbar ist. Der Handschutzhebel 16 dient zur Auslösung der Bremseinrichtung 200 bei einem bedrohlichen Betriebszustand. Das um die Bremstrommel 13 herumgelegte Bremsband 18 ist mit seinem einen Ende 18a an einem gehäusefesten Befestigungszapfen 19 befestigt, während das andere Ende 18b an einem Führungsglied 50 befestigt ist, das in einer Führung 51 linear geführt und verschiebbar ist. Hierzu ist das Führungsglied 50 an einem in einer zylinderartigen Hülse 52 verschiebbar gelagerten Gleitstein 53 angeordnet, der mit einem Bolzen 54 versehen ist. Der Bolzen 54 durchgreift eine Spiralfeder 55, die sich einerseits am Gleitstein 53 und andererseits am Ende 56 der Hülse 52 abstützt. Die Bremsfeder 55 ist als Druckfeder ausgebildet, so daß eine Verschiebung des Führungsgliedes 50 in die Hülse 52 hinein, was einer Lösung des Bremsbandes 18 entspricht, gegen die Federkraft der Bremsfeder 55 erfolgt. Das Führungsglied 50 wird dabei über eine nachstehend noch erläuterte Mechanik in einer Stellung (Ruhestellung) gehalten, in der die Bremsfeder 55 vorgespannt ist, so daß bei einer Freigabe des Führungsgliedes 50 unter Wirkung der Bremsfeder 55 eine Anspannung des Bremsbandes 18 und damit ein Bremsvorgang erfolgt.

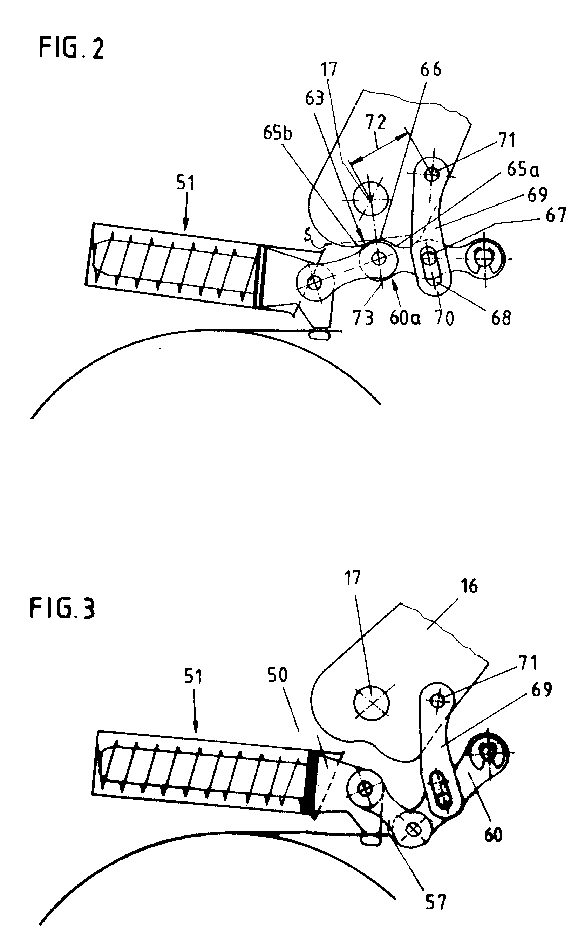

An dem Führungsglied 50 ist unter Ausbildung einer Schwenkachse 58 ein Zwischenglied 57 angeordnet, das über eine weitere Schwenkachse 59 mit einem einarmigen Schwenkhebel 60 verbunden ist, der um eine gehäusefeste Schwenkachse 61 schwenkbar ist. Die Anordnung ist dabei so, daß von dem Zwischenglied 57 und dem Schwenkhebel 60 ein Kniegelenk gebildet wird, daß in eine Rast- und in eine Auslösestellung verschwenkbar ist. Der Bereich der Schwenkachse 58, um die das Zwischenglied 57 an dem Schwenkhebel 60 schwenkbar ist, ist als Betätigungsnocken 64 ausgebildet und an einen Auslöse- und Rastabschnitt 62 des Handschutzhebels 16 anlegbar. Der Auslöse- und Rastabschnitt 62 des Handschutzhebels 16 ist als Steuerkurve 63 mit einer entsprechenden Einziehung 65 ausgebildet, wobei innerhalb der Einziehung 65 der Punkt 66 der stärksten Einziehung den Rastpunkt des Kniehebelgelenkes und den Ruhepunkt des Handschutzhebels 16 in der Auslösestellung bildet. Die Steuerkurve 63 ist dabei mit einer etwa bogenförmigen Einziehung 65 versehen, wobei neben dem Punkt der stärksten Einziehung ausgebildeten Betätigungsnockenruhepunkt zwei Anlageabschnitte 65a,65b vorgesehen sind, die so gestaltet sind, daß bei Anlage des Betätigungsnockens 64 an den Bereich 65a der Steuerkurve 63 und vom Führungsgriff wegführenden einer Verschwenkung des Handschutzhebels eine Verschwenkung des Schwenkhebels 60 um die Schwenkachse 61 so erfolgt, daß das Kniehebelgelenk aus seiner verriegelten und gespannten Stellung entriegelt wird und eine Verschwenkung des Schwenkhebels 60 und des Zwischengliedes 57 so erfolgt, daß die Bremseinrichtung 200 aus der in Fig.2 dargestellten Stellung in die in Fig.3 dargestellte Stellung gebracht und ausgelöst wird.

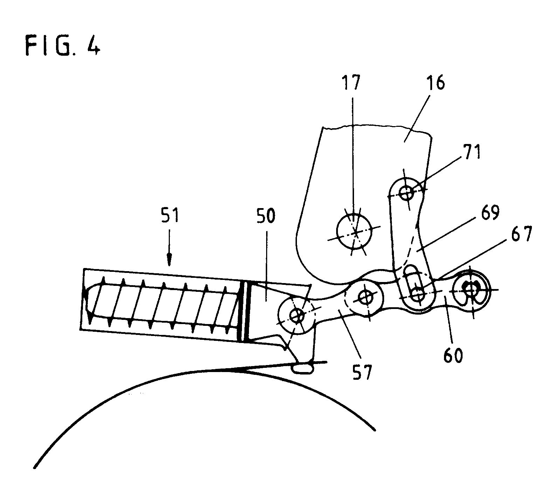

An dem Handschutzhebel 16 ist ein um eine Schwenkachse 71 schwenkbarer und in einem Abstand 72 zur Schwenkachse 17 des Handschutzhebels angeordneter Spannhebel 69 angeordnet, in dessen freiem Ende 70 ein in Spannhebellängsrichtung ausgebildetes Langloch 68 ausgebildet ist. An dem Schwenkhebel 60 ist ein Bolzen 67 vorgesehen, der in das Langloch 68 eingreift, wobei die Langlochanordnung so ist, daß eine Bewegung des Handschutzhebels 16 um die Schwenkachse 17 im Umfang des durch das Langloch 68 gegebene Spiels in bezug auf den Bolzen 67 möglich ist. Um die Bremseinrichtung 200 nach erfolgter Auslösung der Bremse wieder zu spannen, wird der Handschutzhebel aus der in Fig.2 dargestellten Stellung zurückgezogen. Dabei wird die Steuerkurve 63 entlang des Betätigungsnockens 64 bewegt, und es wird ein Einschwenken des Kniehebelgelenkes in seine Raststellung ermöglicht. Dieses Einschwenken erfolgt dadurch, daß der mit dem Handschutzhebel 16 verschwenkte Spannhebel 69 den Bolzen 67 bei der Schwenkbeweggung mitnimmt und somit den Schwenkhebel 60 im Uhrzeigersinn in die Raststellung verschwenkt. Sobald dabei das Kniegelenk über die in Fig.4 dargestellte Stellung hinaus weiter verschwenkt wird, wird es unter Einwirkung der Druckfeder 55 in die in Fig.3 dargestellte Stellung zurückverschwenkt und der Betätigungsnocken 64 nimmt nach Anlage an dem Abschnitt 65b der Steuerkurve 63 zuletzt die in Fig.3 dargestellte Stellung im Punkt 66 ein. Die Bremseinrichtung befindet sich nunmehr wieder in der vorgespannten und verriegelten Ruhestellung des Systems.

Bei Auslösung der Bremse durch Bewegen des Handschutzhebels 16 im Uhrzeigersinn ist nach einer Betätigung des Schwenkhebels 60 dessen freie Verschwenkung möglich, da durch das Langloch 68 eine unabhängige Verschwenkung des Schwenkhebels 60 von der Schwenkbewegung des Handschutzhebels 16 möglich ist.

Die Steuerkurve 63 ist so angeordnet, daß der Betätigungsnockenruhepunkt 66 auf der Druckwirkungslinie 73, die zwischen dem Gelenkmittelpunkt der Schwenkachse 59 und dem Gelenkmittelpunkt der Achse 17 des Handschutzhebels 16 verläuft, angeordnet ist und daß die Abschnitte 65a,65b unter einem Winkel zur einen Senkrechten S, die senkrecht zur Druckwirkungslinie 73 verläuft, angordnet sind (Fig.2).

Die Erfindung ist nicht beschränkt auf die voranstehend beschriebene und in der Zeichnung dargestellte Ausführungsform. Eine andere Ausbildung des Kniehebelmechanismus liegt ebenso im Rahmen der Erfindung wie eine andere Ausbildung des Spannmechanismus, sofern die Haltekraft für den Handschutzhebel durch die Bremsfeder erzeugt wird, so daß die beiden voranstehend beschriebenen Anordnungen nur als Ausführungsbeispiele anzusehen sind.

## Patentansprüche

1. Bremseinrichtung (200) an einer motorgetriebenen Handsäge, insbesondere einer Motorkettensäge (10), mit einem Antriebsgehäuse (14), bei welcher zur Vermeidung eines bedrohlichen Betriebszustandes in der Nähe eines quer zum Sägewerkzeug verlaufenden Führungsgriffes (15) ein von der Bedienungsperson um eine gehäusefeste Achse (17) verschwenkbarer Handschutzhebel (16) angeordnet ist, der bei seiner Schwenkbewegung eine unter der Kraft eines Federelementes (55) stehende Bandbremse (18) durch Aufhebung einer Rastverriegelung (60a) zur Anlage an einer mit dem Sägewerkzeug umlaufenden Bremstrommel (13) bringt, wobei mit dem Handschutzhebel (16) ein Betätigungsnocken (64) betätigbar ist, mit dem ein um eine Schwenkachse (61) schwenkbar gelagerter Schwenkhebel (60) durch eine vom Führungsgriff (15) wegführende Schwenkbewegung des Handschutzhebels (16) entriegelbar ist und dabei die Bremseinrichtung (200) zur Wirkung bringt, und wobei das Federelement (55) zusätzlich zur Fixierung des Handschutzhebels (16) in seiner Ruhestellung dient, und das Bremsband (18) einendseitig (18a) gehäusefest (19) und mit seinem anderen Ende (18b) an einem im Antriebsgehäuse (14) linear geführten, verschiebbaren und mit der Bremsfeder (55) verbundenes Führungsglied (50) befestigt ist, daß ein an einem um die gehäusefeste Schwenkachse (61) schwenkbarer, einarmige Schwenkhebel (60) schwenkbar angelenktes Zwischenglied (57) an dem Führungsglied (50) schwenkbar so angelenkt ist, daß von dem Schwenkhebel (60) und dem Zwischenglied (57) ein Kniehebelgelenk (31) als Rastverriegelung gebildet wird, und daß der Schwenkhebel (60) an einen Auslöse- und Rastabschnitt (62) des Handschutzhebels (16) anlegbar und bei gleitender Berührung bei einer Schwenkbewegung des Handschutzhebels (16) aus der Raststellung in eine entriegelte Stellung verschwenkbar ist,
dadurch gekennzeichnet,
daß durch eine entgegengesetzte Schwenkbewegung des Handschutzhebels (16) unter Lösen des Bremsbandes (18) der Schwenkhebel (60) spannbar und verriegelbar ist, wobei ein an dem Schwenkhebel (60) angeordneter Bolzen (67) in ein in einen am Handschutzhebel (16) um eine Schwenkachse (71) in einem Abstand (72) zu der Schwenkachse (17) des Handschutzhebels (16) schwenkbar angeordneten Spannhebel (69) an dessen freiem Ende (70) in Spanngliedlängsrichtung ausgebildetes Langloch (68) eingreifend angeordnet ist.

2. Bremseinrichtung nach Anspruch 1,
dadurch gekennzeichnet,
daß der Auslöse- und Rastabschnitt (62) als Steuerkurve (63) ausgebildet ist.

3. Bremseinrichtung nach Anspruch 2,
dadurch gekennzeichnet,
daß die Steuerkurve (63) als Einziehung (65) im Handschutzhebel (16) ausgebildet ist.

4. Bremseinrichtung nach Anspruch 2,
dadurch gekennzeichnet,
daß die Steuerkurve (63) als dreieckförmige Einziehung im Handschutzhebel (16) ausgebildet ist.

5. Bremseinrichtung nach Anspruch 2,
dadurch gekennzeichnet,
daß die Steuerkurve (63) als bogenförmige Einziehung (65) im Handschutzhebel (16) ausgebildet ist.

6. Bremseinrichtung nach einem der Ansprüche 1 bis 5,
dadurch gekennzeichnet,
daß der Schwenkhebel (60) einen zur Anlage des Schwenkhebels (60) an der Steuerkurve (63) vorgesehenen Betätigungsnocken (64) aufweist.

7. Bremseinrichtung nach einem der Ansprüche 1 bis 5,
dadurch gekennzeichnet,
daß in der Steuerkurve (63) ein Punkt (66) der stärksten Einziehung als Betätigungsnockenruhepunkt ausgebildet ist, dem eine Ruhestellung des Handschutzhebels (16) entspricht.

8. Bremseinrichtung nach einem der Ansprüche 1 bis 5,
dadurch gekennzeichnet,
daß der Schwenkhebel (60) bei Anlage an den Schwenkhebelruhepunkt (66) in die Raststellung eingeschwenkt ist.

9. Bremseinrichtung nach einem der Ansprüche 1 bis 8,
dadurch gekennzeichnet,
daß das Federelement (55) als Druckfeder ausgebildet ist.

10. Bremseinrichtung nach Anspruch 9,
dadurch gekennzeichnet,
daß das Führungsglied (50) an einem Gleitstein (53) angeordnet ist, der in einer zylindrischen Hülse (52) linear geführt, wobei die Druckfeder (55) zwischen dem Ende (56) der Hülse (52) und dem Gleitstein (53) angeordnet ist, wobei die Druckfeder (55) als Spiralfeder von einem Bolzen (54) als Sicherung gegen Ausknicken durchgriffen wird.

## Claims

1. Braking device (200) on a power-driven handsaw, more particularly a power chain saw (10), having a drive housing (14), in which, in order to prevent a threatening operating state, in the proximity of a guiding grip (15) proceeding transversely to the sawing tool, a hand guard lever (16) is disposed which can be swivelled by the operator about an axis (17) that is integral with the housing, which, in its swivel motion, brings a band brake (18) acted upon by a spring element (55), by releasing a catch locking means (60a), to bear against a brake drum revolving together with the sawing tool, in which case, with the hand guard lever (16), an actuating cam (64) can be actuated, with which a rocking lever (60) swivellably supported about a swivel axis (61) can be released by a swivel motion of the hand guard lever leading away from the guiding grip (15) and thereby renders the braking device (200) effective and wherein the spring element (55) additionally serves to fixate the hand guard lever (16) in its rest position, and the band brake (18) is at one end (18a) integral with the housing (19) and, with its other end (18b), is attached to the guide member (50) linearily guided in the drive housing (14) which is displaceable and connected to the brake spring (55), in that an intermediate member (57) hinged onto the one-armed rocking lever (60) which is swivellable about the swivel axis (61) integral with the housing, is swivellably hinged onto the guide member (50) in such a way that, by means of the rocking lever (60) and the intermediate member (57), a toggle joint (31) is formed in the form of a catch locking means, and in that the rocking lever (60) can be caused to rest against a release and lockably enagging section (62) od the hand guard lever (16) and, in a gliding contact in a swivel motion of the hand guard lever (16), is swivellable from the lockable engagement position into a relased position,
**characterized in that**
by means of an opposed swivel motion of the hand guard lever (16), while loosening the band brake (18), the rocking lever (60) is both tensionable and lockable, while a bolt (67) is disposed on the rocking lever (60) so as to engage into an elongated hole (68) constructed in a tensioning lever (69) in the longitudinal direction of the tensioning member on the free end (70) of the same so as to be swivellable about a swivel axis (71) at a distance (72) from the swivel axis (71) of the hand guard lever (16).

2. Braking device according to Claim 1,
**characterized in that**
the release and lockable engagement section (62) is constructed in the form of a cam (63).

3. Braking device according to Claim 2,
**characterized in that**
the cam (63) is constructed in the form of a recessed portion (65) in the hand guard lever (16).

4. Braking device according to Claim 2,
**characterized in that**
the cam (63) is constructed in the form of a triangular recessed portion in the hand guard lever (16).

5. Braking device according to Claim 2,
**characterized in that**
the cam (63) is constructed in the form of an arcuate recessed portion (65) in the hand guard lever (16).

6. Braking device according to any of Claims 1 to 5,
**characterized in that**
the rocking lever (60) is provided with an actuating cam (64) intended to cause the rocking lever (60) to bear against the cam (63).

7. Braking device according to any of Claims 1 to 5,
**characterized in that**,
in the cam (63), a point (66) of the most markedly recessed portion is constructed in the form of an actuating cam point of rest, to which a rest position of the hand guard lever (16) corresponds.

8. Braking device according to any of Claims 1 to 5,
**characterized in that**
the rocking lever (60), when bearing against the rocking lever point of rest (66), is swivelled into the lockable engagement position.

9. Braking device according to any of Claims 1 to 8,
**characterized in that**
the spring element (55) is constructed in the form of a compression spring.

10. Braking device according to Claim 9,
**characterized in that**
the guide member (50) is disposed on a slide ring (53) which is linearily guided in a cylindrical sleeve (52), while the compression spring (55) is disposed between the end (56) of the sleeve (52) and the slide ring (53), the compression spring (53), in the form of a helical spring, being engaged through by a bolt (54) as a safe-guard against buckling.

## Revendications

1. Dispositif de freinage (200) sur une scie à main actionnée par moteur, en particulier d'une tronçonneuse à chaîne (10), avec un bâti d'entraînement (14), dans lequel, pour éviter un état de fonctionnement menaçant, un levier de protection à main (16), qui peut être pivoté autour d'un axe (17) fixe dans le bâti par une personne qui le manipule, est placé à proximité d'une poignée de guidage (15) qui est transversale par rapport à l'outil de sciage, le levier de protection à main amenant, lors de son mouvement de pivotement, un frein à ruban (18), qui est sous l'effet de la force d'un élément à ressort (55), en appui contre un tambour de frein (13) qui tourne avec l'outil de sciage en supprimant un verrouillage à crans (60a), une came motrice (64) pouvant être actionnée avec le levier de protection à main (16), came avec laquelle un levier pivotant (60), positionné en étant pivotant autour d'un pivot (61), peut être déverrouillé par un mouvement de pivotement du levier de protection à main (16) qui s'éloigne de la poignée de guidage (15) et qui rend ainsi le dispositif de freinage (200) effectif, l'élément à ressort (55) servant en plus à la fixation du levier de protection à main (16) dans sa position de repos et la bande de frein (18) étant fixée à l'une de ses extrémités (18a) de manière fixe au bâti (19) et avec son autre extrémité (18b) à un élément de guidage (50) guidé de manière linéaire dans le bâti de commande (14), qui peut coulisser et qui est relié au ressort du frein (55), qu'un élément intermédiaire (57), articulé de manière pivotante à un levier pivotant (60) à bras unique, pivotant autour de l'axe de pivotement (61) fixe dans le bâti, est articulé sur l'élément de guidage (50) de manière pivotante de telle façon qu'une articulation de genouillère (31) est formée comme un verrouillage à crans par le levier pivotant (60) et l'élément intermédiaire (57) et que le lever pivotant (60) peut être appliqué contre une section de déclenchement et de crantage (62) du levier de protection à main (16) et peut, lors d'un contact glissant lors d'un mouvement de pivotement du levier de protection à main (16), pivoter de la position de crantage dans une position déverrouillée,
**caractérisé en ce**
que le lever pivotant (60) peut être serré et verrouillé par un mouvement de pivotement opposé du levier de protection à main (16) en desserrant la bande de frein (18), un boulon (67) placé sur le lever pivotant (60) étant placé en s'engrenant dans un trou oblong (68) configuré dans le sens longitudinal de l'élément de serrage dans un levier de serrage (69) placé sur le levier de protection à main (16) en étant pivotant autour d'un axe de pivotement (71) à un certain écart (72) de l'axe de pivotement (17) du levier de protection à main (16) à l'extrémité libre (70) du levier de serrage.

2. Dispositif de freinage selon la revendication 1,
**caractérisé en ce**
que la section de déclenchement et de crantage (62) est configurée comme une came de commande (63).

3. Dispositif de freinage selon la revendication 2,
**caractérisé en ce**
que la came de commande (63) est configurée comme une diminution (65) dans le levier de protection à main (16).

4. Dispositif de freinage selon la revendication 2,
**caractérisé en ce**
que la came de commande (63) est configurée comme une diminution en forme de triangle dans le levier de protection à main (16).

5. Dispositif de freinage selon la revendication 2,
**caractérisé en ce**
que la came de commande (63) est configurée comme une diminution en forme d'arc (65) dans le levier de protection à main (16).

6. Dispositif de freinage selon l'une des revendications 1 à 5,
**caractérisé en ce**
que le levier de pivotement (60) présente une came motrice (64) prévue pour appuyer le levier pivotant (60) contre la came de commande (63).

7. Dispositif de freinage selon l'une des revendications 1 à 5,
**caractérisé en ce**
qu'un point (66) de la diminution la plus forte est configuré comme point de repos de la came de commande dans la came motrice (63), point auquel correspond une position de repos du levier de protection à main (16).

8. Dispositif de freinage selon l'une des revendications 1 à 5,
**caractérisé en ce**
que le levier pivotant (60) est pivoté dans la position de crantage lorsqu'il s'appuie contre le point de repos du levier pivotant (66).

9. Dispositif de freinage selon l'une des revendications 1 à 8,
**caractérisé en ce**
que l'élément à ressort (55) est configuré comme un ressort de pression.

10. Dispositif de freinage selon la revendication 9,
**caractérisé en ce**
que l'élément de guidage (50) est placé sur un coulisseau (53) qui est guidé linéairement dans un manchon cylindrique (52), le ressort de pression (55) étant placé entre l'extrémité (56) du manchon (52) et le coulisseau (53), le ressort de pression (55) en tant que ressort spiral étant traversé par un boulon (54) comme sûreté contre la compression axiale.
